**Europäisches Patentamt**

**European Patent Office**

**Office européen des brevets**

(19)

(11) Veröffentlichungsnummer : **0 193 894**
**B1**

(12) ## EUROPÄISCHE PATENTSCHRIFT

(45) Veröffentlichungstag der Patentschrift :
27.07.88

(21) Anmeldenummer : 86102625.0

(22) Anmeldetag : 28.02.86

(51) Int. Cl.⁴ : **C 25 D 13/08, B 32 B 15/08**

(54) **Verfahren zur Herstellung von Verbundstoffen aus Metallen und elektrisch leitfähigen Polymeren.**

(30) Priorität : 02.03.85 DE 3507419

(43) Veröffentlichungstag der Anmeldung :
10.09.86 Patentblatt 86/37

(45) Bekanntmachung des Hinweises auf die Patenterteilung : 27.07.88 Patentblatt 88/30

(84) Benannte Vertragsstaaten :
BE DE FR GB NL

(56) Entgegenhaltungen :
EP-A- 0 099 055
DE-A- 1 621 920

(73) Patentinhaber : BASF Aktiengesellschaft
Carl-Bosch-Strasse 38
D-6700 Ludwigshafen (DE)

(72) Erfinder : Moehwald, Helmut
Sandwingert 53
D-6900 Heidelberg (DE)

EP 0 193 894 B1

## Beschreibung

Die Erfindung betrifft ein Verfahren zur Herstellung von Verbundstoffen aus Metallen und elektrisch leitfahigen Polymeren, bei dem man zunächst durch Behandeln der Monomeren mit einem Oxidationsmittel eine Schicht eines leitfähigen Polymeren auf das Metall aufbringt und anschließend auf das so beschichtete Metall eine elektrisch leitfähige Schicht durch anodische Polymerisation der Monomeren aufbringt.

Nach Arbeiten von A.F. Diaz et al, J.C.S. Chem. Comm. 1979, Seite 635 ; J.C.S. Chem. Comm. 1979, Seite 854 und ACS Org. Coat. Plast. Chem. 43 (1980), werden bei der anodischen Polymerisation von Pyrrol in Gegenwart von Leitsalzen Filme mit elektrischen Leitfähigkeiten bis zu $10^2$ S/cm gebildet. Hierbei handelt es sich um p-leitende Polypyrrole, wobei als Gegenanionen vor allem $BF_4^-$, $SbF_6^-$, $ClO_4^-$ und $HSO_4^-$ genannt werden.

Nach einer Arbeit von K.C. Khulke und R.S. Mann, Journal of Polymer Science, Vol. 20 (1982), Seiten 1089 bis 1055, kann Pyrrol in waßriger Lösung unter der Einwirkung von Kaliumpersulfat polymerisiert werden, so daß sich das Polymerisat in Form eines feinteiligen schwarzen Pulvers abscheidet.

Für die Anwendung von elektrisch leitfähigen Polymeren als Material für Elektroden in Sekundärzellen ist es wichtig, daß die aktive Polymermasse über gut leitende Metalle kontaktiert ist. Dadurch wird gewährleistet, daß die aktive Polymermasse schnell und gleichmäßig be- und entladen werden kann. Versuche anodisch polymerisierbare Monomere, wie Pyrrol oder Thiophen, durch elektrochemische Oxidation direkt auf Aluminium oder andere unedle Metalle aufzubringen, waren nicht erfolgreich, da das Metall zuerst oxidierte und der entstehende Polymerfilm nicht fest auf dem Metall haftet. Im Falle der Verwendung von wäßrigen Elektrolyten entstehen zuerst nicht leitende Aluminiumverbindungen, so daß eine nachfolgende Polymerisation nur unvollkommen erfolgen kann.

Aufgabenstellung der Erfindung ist es ein Verfahren zur Herstellung von Verbundstoffen aus Metallen und elektrisch leitfähigen Polymeren zu schaffen das es ermöglicht, Verbundstoffe mit einer guten Haftung zwischen Metall und leitfähigen Polymeren herzustellen, wobei es auch möglich ist, Verbundstoffe aus unedlen Metallen, z. B. Aluminium und leitfähigen Polymeren herzustellen.

Die Aufgabe der Erfindung wird durch ein Verfahren zur Herstellung von Verbundstoffen aus Metallen und elektrisch leitfähigen Polymeren gelöst, bei dem man auf der Oberfläche des Metalls eine durchgehende Schicht aus einem elektrisch leitfähigen Polymeren durch Behandeln der Monomeren mit einem Oxidationsmittel aufbringt und das beschichtete Metall in eine Lösung eintaucht, die ein anodisch polymerisierbares Monomeres und ein Leitsalz enthält, das beschichtete Metall als Anode schaltet und das Monomere anodisch polymerisiert.

Weitere Gegenstände der Erfindung sind der detaillierten Beschreibung im folgenden zu entnehmen.

Das Verfahren gestattet es einen fest haftenden Zweikomponentenverbund zwischen Metall und elektrisch leitfähigen Polymeren herzustellen ohne daß es erforderlich ist, das Metall vorzubehandeln. So ist es z. B. moglich nach diesem Verfahren Verbundelektroden herzustellen, wobei das Metall als Ableiter dient und zunächst nur an den Stellen, an denen das elektroaktive Elektrodenmaterial aufgebracht werden soll, chemisch mit elektrisch leitfähigen Polymeren beschichtet wird und anschließend das elektrochemisch aktive Elektrodenmaterial durch anodische Polymerisation der Monomeren aufgebrach wird. So ist es z. B. möglich, ein besonders oberflächenreiches leichtes unedles Metall, z. B. Aluminiumstreckmetall, als Ableiter bzw. als Stützelement für Elektroden zu verwenden. Man erhält so geeignete Elektroden, die in Sekundärzellen Verwendung finden können, wobei eine besonders hohe Energiedichte erzielt werden kann.

Zur Herstellung der Verbundstoffe eignen sich Metalle wie sie üblicherweise als elektrische Leiter Verwendung finden, so z. B. Kupfer und Kupferlegierungen. Das Verfahren kommt insbesondere für solche Verbundstoffe in Frage, bei denen leichte, nichtedle Metalle Verwendung finden, so z. B. Aluminium oder Aluminiumlegierungen.

Man bringt zunächst auf das Metall eine durchgehende Schicht aus einem elektrisch leitfähigen Polymeren auf, das man durch Behandeln der die Polymeren bildenden Monomeren mit einem Oxidationsmittel erhält. Solche Monomeren, die mittels Oxidationsmittel polymerisiert werden können, sind z. B. Verbindungen aus der Klasse der fünfgliedrigen heterocyclischen Verbindungen mit einem konjugierten π-Elektronensystem die Stickstoff, Schwefel oder Sauerstoff als Heteroatom enthalten. Beispiele dieser Verbindungen sind solche aus der Klasse der Pyrrole, der Thiophene und der Furane. Von den Pyrrolen eignen sich z. B. das unsubstituierte Pyrrol selbst aber auch N-substituierte Pyrrole wie N-Alkylpyrrol. Es können aber auch andere substituierte Pyrrole wie 3,4-Dialkylpyrrole oder 3,4-Dichlorpyrrole Verwendung finden. Von den Verbindungen der Klasse der Thiophene eignet sich insbesondere das unsubstituierte Thiophen selbst sowie 2- oder 3-Alkylthiophene, z. B. 2,3-Diethylthiophen. Diese genannten fünfgliedrigen heterocyclischen Verbindungen können aber auch zusammen mit anderen copolymerisierbaren Verbindungen, wie z. B. Thiazol, Oxazol oder Imidazol, polymerisiert werden.

Es ist aber auch möglich durch chemische Oxidationsmittel Verbindungen wie Anilin, Benzidin, Indol oder Carbazol zu polymerisieren. Als Oxidationsmittel verwendet man zweckmäßig Sauerstoff enthaltende Oxidationsmittel die, bezogen auf 1 Mol der zu polymerisierenden Verbindung, in Mengen von 0,2 bis 10 Molen Verwendung finden können. Größere Mengen an Oxidationsmittel ist nicht erforderlich, da die Menge ausreicht, den gesamten Ausgangsstoff in Polymere umzuwandeln. Die Polymerisation der Monomeren mittels Sauerstoff enthaltender Oxidationsmittel erfolgt zweckmäßig in Lösung, wobei sich Wasser als Lösungsmittel gegebenenfalls in Abmischung mit organischen, mit Wasser mischbaren Losungsmitteln bewährt hat. Es können aber auch organische Lösungsmittel, wie Dimethylsulfoxid, Methanol, Acetonitril, Ethylencarbonat, Propylencarbonat, Dioxan oder Tetrahydrofuran verwendet werden. Man arbeitet zweckmäßig so, daß die Lösungen 0,1 bis 50 Vol. %, vorzugsweise 1 bis 10 Gew. %, des zu polymerisierenden Monomeren enthalten. Die Menge des zuzusetzenden Oxidationsmittels wird nach dem oben angegebenen Prinzip ermessen. Die Oxidation kann zweckmäßig bei Temperaturen zwischen -20 und +80 °C erfolgen. Die Polymerisation dieser Monomeren erfolgt zweckmäßig in Gegenwart von Leitsalzen, die auch als Komplexierungsmittel oder Dotierungsmittel bezeichnet werden. Als Leitsalze haben sich z. B. $KHSO_4$, $Na_2SO_4$, HCOOH, $LiClO_4$, $HClO_4$, $NEt_4ClO_4$, $NBu_4ClO_4$, $KAlF_3$, $NaAlF_6$, $KBF_4$, $K_2ZrF_6$, $K_2NiF_4$, $HO_2(NO_3)_2$, $H_2SO_4$, $FeCl_3$, $NOPF_6$, $KAsF_6$, $KSbF_6$ oder $KPF_6$, $NBu_4PF_6$ bewahrt. Die Konzentration der Leitsalze ist so bemessen, daß auf 3 Mol des eingesetzten Monomeren oder der Gemische der Monomeren mindestens 1 Mol der oben aufgeführten Leitsalze verwendet werden.

Zum Aufbringen des Polymeren auf das Metall geht man zweckmäßig so vor, daß man zunächst eine Lösung des Monomeren und des Leitsalzes auf die Metalloberfläche aufbringt und danach eine Lösung mit dem Sauerstoff enthaltenden Oxidationsmittel behandelt.

Von den Sauerstoff enthaltenden Oxidationsmitteln haben sich insbesondere Peroxosäuren und deren Salze, wie die Peroxodischwefelsäure und deren Alkali- und Ammoniumsalze bewährt. Vorzugsweise werden auch Peroxoborate oder Peroxochromate, wie Natriumperborat oder Kaliumdichromat, verwendet. Außerdem sind Permanganate, wie Kaliumpermanganat geeignet, wenn man diesem Permanganat geringe Mengen Säure zusetzt. Auch ist bevorzugt die Verwendung von Wasserstoffsuperoxid wobei hier die Anwesenheit von Leitsalzen unumgänglich ist.

Das derart mit einer Schicht aus elektrisch leitfähigen Polymeren überzogene bzw. beschichtete Metall wird nun in eine Lösung eingetaucht, die ein anodisch polymerisierbares Monomeres und ein Leitsalz enthält, wobei das beschichtete Metall als Anode geschaltet wird und das Monomere anodisch polymerisiert wird, so daß die Polymerschicht auf die bereits vorhandene aufwächst. Die anodisch polymerisierbaren Monomeren können die gleichen wie die obigen genannten sein. Es kommen also Verbindungen aus der Klasse der Pyrrole, der Thiophene oder der Aniline

in Frage. Weiterhin ist es möglich, z. B. Anilin chemisch als Polymerüberzug auf Aluminium aufzubringen. Dazu benetzt man das Aluminium zuvor mit einer Lösung aus 10 Vol. % Anilin in 10 ml einer Mischung aus HCl-Methanol im Verhaltnis 1 :3. Dann wird eine Lösung des Oxidationsmittels aufgebracht.

Die Konzentration des Monomeren im Lösungsmittel beträgt hierbei im allgemeinen etwa um 0,1 Mol pro Liter Lösungsmittel. Sie kann aber auch in weiten Grenzen unterschritten bzw. überschritten werden. Zweckmäßig arbeitet man mit Konzentrationen von 0,01 bis 1 Mol Monomer pro Liter Lösungsmittel.

Als Elektrolytlösungsmittel kommen die oben genannten Lösungsmittel in Frage. Besonders geeignet sind die für die anodische Oxidation der oben genannten heterocyclischen Verbindungen üblichen polaren organischen Lösungsmittel, die die Monomeren und das Leitsalz zu lösen vermögen. Das Lösungsmittel selbst soll möglichst aprotisch sein. Bevorzugt sind Alkohole, Ether, wie 1,2-Dimethoxyethan, Dioxantetrahydrofuran, Aceton, Acetonitril, Dimethylformamid oder Propylencarbonat.

Im Falle von Anilin ist es zweckmäßig in sauren Elektrolyten von pH=0 zu arbeiten, z. B. in 1 M $HClO_4$, HCl, $HBl_4$ oder $H_2SO_4$.

Als Leitsalz können die ebenfalls für derartige anodische Oxidationen der heterocyclischen Verbindungen bzw. der anderen genannten Monomeren an sich bekannte übliche anionische oder ionisierbare Verbindungen Verwendung finden, z. B. die oben genannten Leitsalze die bei der Oxidation der Monomeren mit Sauerstoff enthaltenden Oxidationsmitteln zugegen sein können. Geeignet sind auch Anionen von Aromaten mit sauren Gruppen, z. B. substituierte aromatische Sulfonsäuren und Polysulfonsäuren. Besonders bevorzugt sind Leitsalze die Benzolsulfonat- oder Polylatanionen enthalten. Die Leitsalzkonzentration ist bei dem Verfahren im allgemeinen zwischen 0,001 bis 1, vorzugsweise 0,01 bis 0,1 Mol/1 Lösungsmittel.

Das Verfahren kann in einer elektrolytischen Zelle oder Elektrolyseapparatur mit einer externen Gleichstromquelle, Spannungsquelle oder Potentiostaten durchgeführt werden. Das mit leitfähigen Polymeren beschichtete Metall wird dabei als Anode geschaltet. Die Polymerisation kann unter konstantem Strom (galvanostatisch) oder konstanter Spannung (potentiostatisch) oder durch Variation der Spannung (potentiodynamisch) durchgeführt werden. Die Polymerisation kann mit Gleich- oder Wechselstrom erfolgen.

Die Kathode kann z. B. aus einem anderen Metall wie Platin, Molybdan, Wolfram oder aus Edelstahl, Nickel oder Titan oder einer Legierung oder Kohlenstoffmaterialien (Graphit, Kohlenstoff-Fasern, Glaskohlenstoff) bestehen.

Die Reaktionstemperatur bei der das Verfahren betrieben wird, hat sich als unkritisch erwiesen, so daß in einem breiten Bereich gearbeitet werden kann, solange die Erstarrungstemperatur bzw. die Siedetemperatur des Elektrolytlosungsmittels nicht unter- bzw. überschritten wird. Im allgemeinen hat sich als Reaktionstemperatur ein Bereich von -20 bis 80° C als vorteilhaft erwiesen, wobei man normalerweise bei Raumtemperatur (22 bis 24° C) arbeitet. Im übrigen können die bekannten, für derartige Verfahren angewandten Elektrolysebedingungen eingehalten werden. Zweckmäßig liegt die Spannung der Arbeitsanode, in der die elektrochemische Polymerisation betrieben wird, im Bereich von 0,5 bis 3 Volt, vorzugsweise im Bereich von 0,8 bis 2 Volt, gemessen gegenüber einer gesättigten Kalomel-Referenzelektrode. Für die Stromdichte haben sich Werte von 0,01 bis 100 mA/cm$^2$, vorzugsweise von 0,1 bis 3,5 mA/cm$^2$, als vorteilhaft erwiesen. Im allgemeinen strebt man Dicken der aufgebrachten Schicht von leitfähigen Polymeren zwischen 10 und 100 $\mu$m an. Die Schichtdicke ist von der Polymerisationsdauer abhängig. Die erhaltenen beschichteten Metalle werden anschließend zum Entfernen anhaftender Lösungsmittel mit Lösungsmittel gewaschen und können getrocknet werden. Für den Einsatz als Batterie-elektrode wird oft auf eine Trocknung verzichtet. In den erfindungsgemäß hergestellten Verbundstoffen liegt das Polymere als Komplexkation des Polymeren mit dem Gegenanion des Leitsalzes vor. Die elektrische Leitfähigkeit des Polymeren liegt meist im Bereich von 10$^{-2}$ bis 10$^2$ S/cm. Derartige Verbundstoffe finden verschiedene Anwendungen. Sie werden insbesondere als Elektroden in elektrischen Speichersystemen, wie Batterien, verwendet, die wiederaufladbar sind. Sie können auch als Abschirmmaterial als Halbleiterbauteile bzw. als elektrische Leiter Verwendung finden.

Die Erfindung wird durch die nachfolgenden Beispiele näher erläutert. Die in den Beispielen angegebenen Teile und Prozente beziehen sich auf das Gewicht.

Beispiel 1

Eine Aluminiumfolie wird mit einer Lösung von 7 Teilen Benzolsulfonsäure, 4 Teilen Pyrrol in 100 Teilen Methanol oberflächlich benetzt. Danach bringt man eine Lösung die 5 Teile Natriumpersulfat in einem Gemisch aus Methanol und Wasser im Verhältnis 1 :1 enthält auf die Oberfläche der Aluminiumfolie auf. Nach einer Dauer von etwa 15 Minuten hat sich ein dünner, glatter, zusammenhängender Polymerfilm aus Polypyrrol ausgebildet. Der Polymerfilm läßt sich nach dem Trocknen nicht mit Methanol bzw. mit einem Gemisch oder Methanol und Wasser von der Aluminiumoberfläche entfernen.

Danach wird die so beschichtete Aluminiumfolie in eine Lösung von 5 Teilen Pyrrol, 7 Teilen Benzolsulfonsäure in 100 Teilen Methanol eingetaucht. Die beschichtete Aluminiumfolie wird als Anode geschaltet, als Kathode findet eine Metall-Elektrode Verwendung, die in 2,5 cm Abstand von der Anode angeordnet ist. Es wird mit einer Stromdichte von 1 mA gearbeitet. Nach einer Dauer von 90 min hat sich eine Polymerschicht von 40 $\mu$m ausgebildet.

Die beschichtete Aluminiumfolie kann auch in einen aprotischen Elektrolyten, bestehend aus 0,5 M LiClO$_4$ in Propylencarbonat, worin 2 ml Pyrrol gelöst ist, eingetaucht werden. Die beschichtete Folie wird wieder als Anode geschaltet und das Pyrrol wie oben beschrieben polymerisiert.

Patentansprüche

1. Verfahren zur Herstellung von Verbundstoffen aus Metallen und elektrisch leitfähigen Polymeren, dadurch gekennzeichnet, daß man auf die Oberfläche des Metalls eine durchgehende Schicht aus einem elektrisch leitfähigen Polymeren durch Behandeln der Monomeren mit einem Sauerstoff enthaltenden Oxidationsmittel aufbringt und das so beschichtete Metall in eine Lösung eintaucht, die ein anodisch polymerisierbares Monomeres und ein Leitsalz enthält und das beschichtete Metall als Anode schaltet, so daß das Monomere anodisch polymerisiert.

2. Verfahren nach Anspruch 1, dadurch gekennzeichnet, daß man eine Verbindung aus der Klasse der Pyrrole oder der Thiophene oder Aniline mit einem Oxidationsmittel behandelt.

3. Verfahren nach Anspruch 1, dadurch gekennzeichnet, daß man eine Verbindung aus der Klasse der Pyrrole oder der Thiophene oder Aniline anodisch polymerisiert.

4. Verfahren nach Anspruch 1, dadurch gekennzeichnet, daß man Aluminium oder Aluminium enthaltende Legierungen als Metallschicht verwendet.

Claims

1. A process for the preparation of a laminate of a metal and an electrically conductive polymer, wherein a continuous layer of an electrically conductive polymer is applied onto the surface of the metal by treating the monomers with an oxygen-containing oxidizing agent, the metal coated in this manner is immersed in a solution which contains an anodically polymerizable monomer and a conductive salt, and the coated metal is made the anode, so that the monomer is anodically polymerized.

2. A process as claimed in claim 1, wherein a compound from the class consisting of the pyrroles, the thiophenes or the anilines is treated with an oxidizing agent.

3. A process as claimed in claim 1, wherein a compound from the class consisting of the pyrroles, the thiophenes or the anilines is anodically polymerized.

4. A process as claimed in claim 1, wherein aluminum or an aluminum-containing alloy is used as the metal layer.

Revendications

1. Procédé de préparation de matériaux composites de métaux et de polymères conducteurs de l'électricité, caractérisé en ce que l'on réalise à la surface du métal une couche continue d'un polymère conducteur de l'électricité par le traitement des monomères par un agent oxydant contenant de l'oxygène, on plonge le métal ainsi enduit dans une solution contenant un monomère polymérisable par voie anodique et un sel conducteur, puis on utilise le métal enduit comme anode pour la polymérisation anodique du monomère.

2. Procédé suivant la revendication 1, caractérisé en ce que l'on traite avec un agent oxydant un composé de la classe des pyrroles ou des thiophènes ou des anilines.

3. Procédé suivant la revendication 1, caractérisé en ce que l'on soumet à la polymérisation anodique un composé de la classe des pyrroles ou des thiophènes ou des anilines.

4. Procédé suivant la revendication 1, caractérisé en ce que la couche de métal est en aluminium ou en un alliage contenant de l'aluminium.